# EUROPÄISCHE PATENTANMELDUNG

(11) **EP 3 037 713 A1**
(43) Veröffentlichungstag der Anmeldung: **29.06.2016**
(21) Anmeldenummer: 15003606.9
(22) Anmeldetag: 17.12.2015
(51) Int. Cl.: F21K 99/00, B61L 5/18, F21V 23/04, F21V 23/06, H05B 33/08, F21V 29/90, F21Y 115/10

(54) **LEUCHTVORRICHTUNG FÜR EINE LICHTSIGNALANLAGE DES SCHIENENGEBUNDENEN VERKEHRS**

(30) Priorität: 23.12.2014 DE 102014019475
(71) Anmelder: DB Netz AG, 60486 Frankfurt a.M. (DE); Schmidt, Karlheinz, 63584 Gründau (DE)
(72) Erfinder: Schmidt, Simon, 63584 Gründau (DE); Schmidt, Karlheinz, 63584 Gründau (DE)

(57) **Zusammenfassung**

Die Erfindung betrifft eine Leuchtvorrichtung für eine Lichtsignalanlage des schienengebundenen Verkehrs, wobei die Leuchtvorrichtung mindestens eine lichtemittierenden Diode (LED) (1) besitzt.

Der Erfindung liegt die Aufgabe zugrunde, ein Leuchtmittel für bestehende Lichtsignalanlagen des Schienenverkehrs auf der Basis von LEDs zu entwickeln, welches die Nachteile des Standes der Technik vermeidet und einen sicheren, störungsfreien Einsatz im Fahrbetrieb sowie bei einem Ausfall von Teilen des Leuchtmittels eine weitere uneingeschränkte Nutzung bis zu seinem Austausch gewährleistet.

Dies wird erfindungsgemäß dadurch erreicht, dass
die Grundplatine
• mind. einen an sich bekannten Microcontroller,
• mind. eine Elektronik (16) zur Regelung und Überwachung der Versorgungsspannung der LEDs (1),
• mind. eine Elektronik (16) zur Regelung und Überwachung der Lichtleistung und/oder Anzahl der LEDs (1),
• einen Encoder oder DIP-Schalter (18) zur Einstellung des Glühlampen-Typ's in Form von Versorgungsspannung, Helligkeit, zusätzliche Widerstände (20) sowie LED-Ansteuerung, eine Photozelle (11) oder eine Photodiode und
• einen zusätzlichen Verbraucher in Form eines Wärmekörpers (12) aufweist,
wobei die verschiedenen regelbaren LEDs (1) mit einer lichtfokussierenden Signaloptik gekoppelt sind.

## Beschreibung

Die Erfindung betrifft eine Leuchtvorrichtung für eine Lichtsignalanlage des schienengebundenen Verkehrs, wobei die Leuchtvorrichtung mindestens eine lichtemittierenden Diode (LED) besitzt.

Die bisher verwendeten Leuchtmittel in Signalanlagen im Bahnbetrieb sind hauptsächlich Glühfaden-Leuchtmittel mit mind. 2 Glühfäden. Gängige Modelle seit vielen Jahren als bekannt anzusehen.
Das Funktionsprinzip eines Glühfaden-Leuchtmittels, indem ein elektrischer Strom durch einen Leiter mit definiertem Widerstand fließt und damit zum Leuchten bringt, ist ausreichend bekannt. Die herkömmlichen Zwei-Faden-Glühlampen in konventionellen Lichtsignalanlagen verwenden jeweils einen sogenannten Haupt- und einen Nebenfaden (auch Ersatzfaden genannt), die in der Glühlampe versetzt angeordnet sind, wobei der Nebenfaden dazu dient, ein Funktionieren der Glühlampe bei Ausfall des Hauptfadens zu sichern und quasi eine "interne Ersatzlampe" bildet. Bei Ausfall des Hauptfadens erfolgt die Umschaltung auf den Nebenfaden automatisch, wobei das Umschalten gleichzeitig als Fehler erkannt wird, so dass der erforderliche Lampentausch dem Wartungspersonal angezeigt werden kann.

Halogenlampen besitzen gegenüber dem Glühfaden eine höhe Lebensdauer sowie eine geringere Leistungsaufnahme bei gleichbleibender Lichtstärke.
Das Funktionsprinzip bei Halogen-Leuchtmitteln ist ebenfalls allgemein bekannt und unterscheidet sich gegenüber dem normalen Glühfaden nur mittels eines zusätzlichen, eingeschlossenen Gases (Halogen), welches zu einer höheren Lichtausbeute führt.

In neugebauten Signalanlagen des Schienenverkehrs kommen bereits LED-Leuchtmittel zum Einsatz.
LEDs besitzen gegenüber Glüh- und Halogenleuchtmitteln eine wesentlich höhere Lebensdauer und eine wesentlich geringere Stromaufnahme.
Das Funktionsprinzip bei LED-Leuchtmitteln, in denen eine Kristallschicht (Halbleiterschicht mit n- und p-Dotierung) fließende Elektronen (Strom) beim Überwinden dieser Schicht dazu anregt zu leuchten ist gleichfalls allgemein bekannt.
Gemäß US-Patentschrift 6.150.771 werden in Verkehrssignalanlagen herkömmlicherweise Glühlampen verwendet, um das Lichtsignal zu erzeugen, das der Verkehrslenkung dient. Eine Alternative zu Verkehrssignalen, die durch Glühlampen erzeugt werden, sind Verkehrssignale, die mit Leuchtdioden (LEDs) arbeiten. Angesichts der Kosten für den Austausch kompletter Lichtanlagen ist es wünschenswert, die derzeitigen Leuchtmittel in den Lampen auf LEDs aufzurüsten, statt die gesamte Lichtanlage auszutauschen. Das Ersetzen von Glühlampen durch LEDs impliziert jedoch mehrere technische Probleme. Insbesondere LED-Felder, die ältere Glühlampen ersetzen, müssen kompatibel mit der älteren Glühlampen-Lastschalttechnik und den damit zusammenhängenden Konfliktüberwachungsgeräten sein, wie dies in der US-Patentschrift 6.150.771 beschrieben wird. Das signifikanteste Problem laut US-Patentschrift 6.150.771 besteht darin, LED-Felder so zu betreiben, dass sie eine elektrische Last ergeben, die annähernd eine solche ohmsche Last ist, die eine reibungslose Übertragung der elektrischen Leistung von der Stromversorgungsleitung zur Verkehrssignallast erlauben würde. Zu den anderen Problemen, die von der US-Patentschrift 6.150.771 behandelt werden, zählt das Problem der Kompatibilität, die sich im Fall eines Ausfallzustands eines Verkehrssignals ergibt. Herkömmliche Überwachungsgeräte erfassen die Spannung über ein Signal und sind als solche nur zusammen mit einem Signal nutzbar, das von Glühlampen bereitgestellt wird, außer wenn spezifische Modifikationen an den Signalen durchgeführt werden, die von anderen Arten von Leuchtmitteln bereitgestellt werden. Um dieses Problem zu überwinden, beschreibt die US-Patentschrift 6.150.771 einen Schnittstellenschaltkreis, der einen OFC-Schaltkreis (Schaltkreis, der einen Zustand mit offenem Glühfaden erfasst) zur Meldung eines offenen Schaltkreiszustands an ein Konfliktüberwachungsgerät beinhaltet, wenn die Eingangsspannung hoch ist und der Rückmeldestrom um einen bestimmten Wert fällt. Wenn dies geschieht, beendet der OFC-Schaltkreis den Signalbetrieb und präsentiert dem Überwachungsgerät eine derartige Bedingung als Glühlampenausfall-Signal. Ein Ausfallschaltkreis wird aktiv, der die Abnahme des Ausgangsstroms auf Grund des LED-Signalausfalls erfasst. Wenn der Ausgangsstrom mehrere Sekunden lang um mindestens 50% fällt, schließt der Ausfallschaltkreis eine Sicherung kurz. Die durchgebrannte Sicherung meldet dem Überwachungsgerät dann ununterbrochen ein Ausfallsignal, das einer unendlichen Eingangsimpedanz entspricht.
Gemäß US-Patentschrift 6.150.771 wird die Kompatibilität mit einem Konfliktüberwachungsgerät durch bestimmte Schaltkreise erreicht, die ein Sinken des Stroms zur LED erfassen und die jedes Mal den Eingangsstrom ändern, um eine annähernd ohmsche Last zu erzielen. Dies impliziert eine Stromquelle, die einen Eingangsstrom liefert, der eine Hüllkurve aufweist, die im Wesentlichen identisch ist mit der Eingangsspannung, die ein sinuskurvenförmiges Profil hat.

Die US-Patentschrift 6.118.259 offenbart ein Gerät in Übereinstimmung mit der kennzeichnenden Klausel des Hauptpatentanspruchs für den Austausch von Glühlampen durch andere Lichtquellen als Glühlampen. Der von der Austauschlichtquelle gezogene Strom wird geregelt, um eine irrtümliche Erfassung eines Ausfalls zu verhindern.

Aus der GB-A-2208026 ist bekannt, dass eine Anordnung von lichtemittierenden Dioden (LED) anstelle einer Glühlampe in einem Verkehrssignal eingesetzt wird. LED weisen einen wesentlich höheren Wirkungsgrad als Glühfäden verwendende Lichtquellen auf. Sie wandeln ungefähr 10% der zugeführten Energie in Lichtenergie um. Dazu kommt, dass LED in mehreren Farben zur Verfügung stehen, und dass es demzufolge eventuell nicht notwendig ist, ein Filter, das ansonsten die Lichtleistung und damit den Wirkungsgrad des Lichtsignals verringern würde, zu verwenden.
Die derzeit zur Verfügung stehenden LED hoher Lichtstärke ermöglichen es, unter Einsatz einer überschaubaren Anzahl von Elementen eine der Lichtleistung von Glühfäden entsprechende Lichtleistung zu erreichen.

Aus der DE 698 06 748 T2 ist bekannt:
- eine Anordnung von lichtemittierenden Dioden (LED);
- ein Überwachungssystem, das dazu dient, wenigstens einen der folgenden Parameter zu überwachen;
- die Lichtstärke der LED, die dann mit einem Schwellenwert verglichen wird, bzw. den Zustand der LED, um festzustellen, ob eine LED ausgefallen ist; und
- einen Controller zum Erzeugen eines Steuersignals zum Steuern des Verkehrssignals in Abhängigkeit von dem Ergebnis der Überwachung durch das Überwachungssystem.
Es ist zu erkennen, dass ein LED-Typ zum Einsatz kommen soll, welcher für die Nachrüstung der bestehenden Signale nicht geeignet ist.
Bei dieser Lösung kommen auch neue optische Prismen zum Einsatz, die jedoch komplett anders, als die bei Glühlampen verwendeten sind. Diese müssen aufwändig für die unterschiedlichen Signalbauformen entwickelt werden, was ein enormer Kostentreiber ist. Bei dieser Lösung wird ein großer Fokus auf die Lichtverteilung gelegt. Im Falle einer Imitation des Glühfadens (nicht die Aufgabe der bisherigen Streulinse zu übernehmen) treten die geschilderten Probleme nicht auf, da die Streulinse weiter verwendet werden kann.

Aus der WO 95/12512 ist eine Schaltungsanordnung zur Abgabe von optischen Signalen bekannt, die in der Verkehrstechnik einsetzbar ist und bei der Leuchtdioden als Signallampen zur Anwendung kommen. Dabei sind mehrere Leuchtdioden zu einem Funktionsblock in Reihe geschaltet, der die Speisung und Überwachung der betreffenden Leuchtdioden übernimmt und somit den Strom der LED eines Blockes steuert und damit die Leuchtstärke den jeweiligen Bedingungen anpasst. Mit Hilfe einer Überwachungseinheit werden die LED eines Blockes auf Unterbrechung überwacht.
Wenn ein Fehler erkannt wird, dann erfolgt dazu eine Meldung. Nachteilig ist die Reihenschaltung der LED eines Blockes, die bei einer Unterbrechung nur einer LED zum Ausfall der LED des Blockes führt.
Weiterhin ist die vorgesehene Überwachungseinheit nicht in der Lage, alle auftretenden Fehler zu erkennen, z. B. einen LED-Kurzschluß, oder zu erkennen, wenn eine LED trotz Stromfluss nicht leuchtet. Die Verfügbarkeit des LED- Signals ist zudem stark eingeschränkt.
Ein weiterer Nachteil besteht darin, dass das Signal bei Einkopplung von Fremdenergie (kapazitiv eingekoppelt wegen hoher Stellentfernung) zu leuchten beginnt bzw. zum Schwingen neigt.

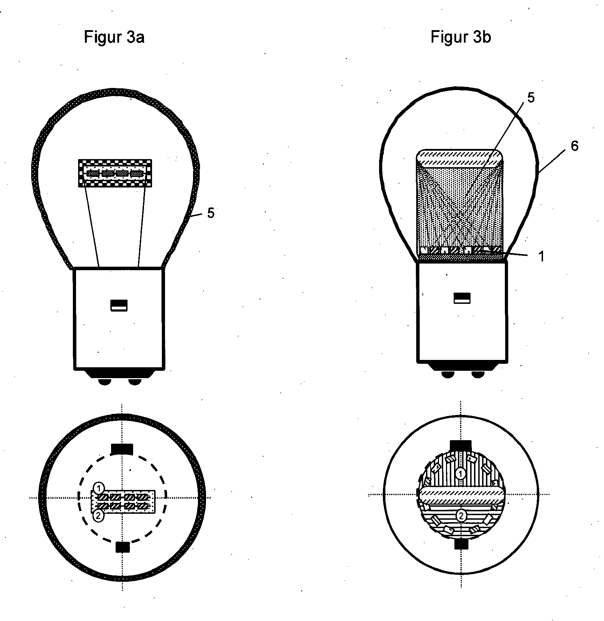

Aus der WO 2012/076 313 A1 ist eine Leuchtvorrichtung für eine Lichtsignalanlage des schienengebundenen Verkehrs bekannt, wobei die Lichtsignalanlage mindestens eine lichtemittierende Diode sowie einen Microcontroller besitzt. Auf Grund der Beschreibungen in Anspruch 1 b "stellwerkseitige Schnittstelle zum Bezug elektrischer Leistung seitens des Stellwerks" und der Figur 3 (LED 50, LED 70, LED 136) zielt das Patent auf einen LED-Ersatz für Signalglühlampen ab, bei dem die komplette Optik des Signals bzw. Signalgeber getauscht und neue Anschlussschnittstellen im Signal selbst geschaffen werden müssten, d.h. es ist beabsichtigt, die komplette "Signal-Leucht-Fläche" mit einzelnen vielen LEDs bestücken.
Konkret bedeutet das folgenden Umbau bei bestehenden Signalen:
- Der bisherige Lampensockel zur Aufnahme der bisherigen Signalglühlampe müsste entfernt werden (Schrauben lösen).
- Die bisherigen Stromversorgungsanschlüsse zum Lampensockel müssten abgeklemmt werden (Schrauben lösen).
- Die optischen Elemente (Linse) müssten ggf. auch entfernt werden (Schrauben lösen).
- Dichtungen müssten ggf. nach dem Ablösen der vorigen genannten Elemente entfernt und neue angebracht werden, um zu verhindern das Feuchtigkeit in den Signalschirm gelangt.
- Das neue Modul inkl. LEDs müssten je nach Bauform in Größe und Form angepasst und für die bestehende Halterungen eingepasst werden (viele unterschiedliche Bauformen).

Dieser Umbau birgt auf Grund des meist hohen Alters der Signale einige Risiken:
- Die zu öffnenden Schrauben sind oftmals auf Grund der langausgesetzten Witterungen durch Feuchte schwergängig oder lassen sich gar nicht mehr aufdrehen, so dass dann die Komponenten mit viel Aufwand entfernt werden müssen (Heraussägen oder Bohren etc.).
- Die alten Kabel zur Stromversorgung des bisherigen Lampensockels sind oftmals auf Grund des Alters porös geworden und brechen beim Anschluss an den Controller. Wackelkontakte sind dann schwierig zu identifizieren und ein neues Kabel muss nachträglich sehr aufwändig eingezogen werden.
- Das Entfernen der Linse ist je Signalbauart auch schwierig, weil dies teilweise nur durch Lösen der Schrauben vom Signalschirm aus funktioniert, was bei manchen Bauarten nur mit Hubwagen bzw. Turmtriebwagen möglich ist. Zusätzliche Schwierigkeit: Die Schirme oberhalb des Signalgebers ist in vielen Fällen aus GFK und geklebt. Rutscht man beim Versuch zum Lösen der Schrauben von vorne dann ab passiert es leicht, dass man den Schirm mitabreißt. Diesen Schaden zu beheben, ist dann wieder sehr aufwändig und zeitintensiv.
- Bei der Demontage der Gummidichtungen haften Teile davon auf Grund der langausgesetzten Witterungsverhältnisse porös oder stark am Signalschirm an. Das Entfernen der alten Reste ist für die neue Dichtung jedoch wichtig und funktioniert meist nur mit aggressiven Reinigungsmitteln, welche auch für den Mitarbeiter ggf. aufwändigere Schutzmaßnahmen bedeuten. Der Zeitaufwand hierfür allein wäre erheblich aufwendiger, als der simplen Tausch des Leuchtmittels. Für jede Signal-Bauart (in Deutschland über 200) müsste erst geprüft werden, in wie weit die Halterungen und die Größe in das Signal hineinpasst bzw. im Signal befestigt werden kann. Das ist sehr aufwändig und es müssten viele unterschiedliche Bauformen entwickelt werden.

Aus den oben genannten Gründen ist zu erkennen, dass die WO 2012/076 313 A1 für die Nachrüstung bestehender Signale nicht geeignet ist. Die Kosten für die Arbeitszeit des Umbaus, die besonderen Auflagen und Gefahren des Arbeitens in Höhen (teils über 7 Meter in Deutschland) sind wirtschaftlich nicht rentabel. Beim Neubau eines Signals ist diese Ausführung ebenfalls fraglich, da der Austausch der LEDs wesentlich aufwändiger ist, als das bisherige Tauschen auf Basis eines Lampensockels (z.B. des aktuell in Deutschland meist verwendetsten "BA20d").
Im Übrigen wird auf das Problem des Ersatzsystems mit Haupt- und Nebenfaden gar nicht oder nur sehr kurz eingegangen.

Die DE 198 46 753 A1 stellt ein aus LED gebildetes Signal für die Verkehrstechnik, welches seine Helligkeit der jeweiligen Ansteuerung anpasst und welches Störsignale unterdrückt, die bei einer Ansteuerung über eine größere Entfernung eingekoppelt werden können, so dass Glühlampen eines herkömmlichen Leuchtzeichens zuverlässig und ausfallsicher durch Leuchtdioden auch ohne Veränderung einer vorhandenen Anschalteinrichtung austauschbar sind.

Bei den Signalanlagen im Bahnbetrieb gibt es für die Leuchtmittel sogenannte Sicherheitseinrichtungen in Form von Relais. Ist ein Leuchtmittel defekt bzw. ein Glühfaden durchgebrannt, so fällt ein Relais und zeigt den Defekt an. Die Instandhaltung weiß dann, welches betreffende Leuchtmittel ausgetauscht werden muss.
Für die o.g. Sicherheitseinrichtung (Relais) ist jedoch ein Mindest-Schaltstrom notwendig, der bei bisherigen stromarmen LEDs nicht erreicht wird.

Die bahnseitig notwendige zweifache Sicherheit, d. h. doppelter Glühfaden und Überwachungseinrichtung konnte bisher durch die vorhandene LED-Technik nicht in Form einer Glühlampe bzw. als direkten Ersatz zur Verfügung gestellt werden.

Zudem ist folgendes festzustellen:
1. Hersteller von Signalanlagen besitzen wenig Motivation Leuchtmittel zu entwickeln, die eine lange Lebensdauer besitzen, da dies Absatzverluste für bestehende Leuchtmittel wie Glühlampen darstellt. Zudem gibt es im Bahnsektor noch keine rechtlichen Vorschriften zur Einführung von LED-Technologien.
2. Leuchtmittelhersteller besitzen für die Entwicklung einer modifizierbaren LED nicht das erforderliche Know-how, das bei unterschiedlichen Stellwerktechniken notwendig ist.
3. Die Signalanlagenhersteller unternehmen keine Anstrengung den Lebenszyklus bestehender Signalanlagen zu verlängern, da das Geschäftsmodell darauf beruht, dem Eisenbahnunternehmen komplett neue Signalanlagen zu verkaufen und nicht nur neue Leuchtmittel.

Da es eine Vielzahl an unterschiedlichen eingesetzten Glühlampen gibt, müssten mehrere LEDs mit unterschiedlichen Spannungen, Lichtstärken und Farborten entwickelt werden. Diese Vielfalt würde den Entwicklungsaufwand zudem erheblich erhöhen.

Der Erfindung liegt die Aufgabe zugrunde, ein Leuchtmittel für Lichtsignalanlagen des Schienenverkehrs auf der Basis von LEDs zu entwickeln, welches die Nachteile des Standes der Technik vermeidet und einen sicheren, störungsfreien Einsatz im Fahrbetrieb sowie bei einem Ausfall von Teilen des Leuchtmittels eine weitere uneingeschränkte Nutzung bis zu seinem Austausch gewährleistet.

### Dies wird erfindungsgemäß dadurch erreicht, dass

die Grundplatine
- mind. einen an sich bekannten Microcontroller,
- mind. eine Elektronik zur Regelung und Überwachung der Versorgungsspannung der LEDs,
- mind. eine Elektronik zur Regelung und Überwachung der Lichtleistung und/oder Anzahl der LEDs,
- einen Encoder oder DIP-Schalter zur Einstellung des GlühlampenTyp's in Form von Versorgungsspannung, Helligkeit, zusätzliche Widerstände sowie LED-Ansteuerung, eine Photozelle oder eine Photodiode und
- einen zusätzlichen Verbraucher in Form eines Wärmekörpers aufweist,
wobei die verschiedenen regelbaren LEDs mit einer lichtfokussierenden Signaloptik gekoppelt sind.

Zur Steuerung der Microcontroller ist ein Com-Port in der Grundplatine angeordnet.

Zur Einstellung der Versorgungsspannung sind Drehregler oder Dipschalter in der Grundplatine angeordnet.

Zur Einstellung der Lichtleistung sind Drehregler oder Dipschalter in der Grundplatine angeordnet.

Innerhalb oder außerhalb der Leuchtvorrichtung kann sich ein zusätzlicher Verbraucher in Form eines Wärmekörpers befinden.

Der Lampensockel weist an seiner Unterseite eine Mini-USB-Buchse zur Aufnahme einer Mini-USB-Platine auf.

Der Lampensockel, die Elektronik, der Kolben sowie der Lichtwellenleiter sind vorzugsweise austauschbar gestaltet. Der Lampensockel kann auch schraubbar ausgeführt sein.

Im Lampensockel sind verschiedene Widerstände angeordnet, wobei jedem Widerstand ein Glühlampentyp-Firmware-Modus zugeordnet ist.

In der Leuchtvorrichtung ist eine Überwachungseinrichtung angeordnet.

Als Überwachungseinrichtung dient eine Photozelle oder eine Photodiode zur Messung des durch die Signaloptik reflektierenden und/oder von den LEDs abstrahlenden Lichtes im Vergleich mit einem gespeicherten Wert.

Der Lichtwellenleiter ist so angeordnet, dass auch bei Aktivierung des Ersatzsystems der korrekte Leuchtort erhalten bleibt.

### Vorteile der Erfindung

- es werden eine Vielzahl von Glühfadenleuchtmittel durch eine regelbare LED ersetzt
- die LED passt in nahezu alle Lampenfassungen, ohne dass eine Fehlinstallation möglich ist
- die LED kann jederzeit mittels einer Überwachungseinrichtung auf Funktionsfähigkeit geprüft und ggf. ausgetauscht werden
- Das LED-Leuchtmittel hat den gleichen Sockel und in etwa die gleiche Größe, wie die bisher verwendeten Signalglühlampen (Glaskolben) besitzen.
- Das LED-Leuchtmittel hat die gleiche Leuchtkraft und besitzt den gleichen Leucht-Ort, wie der Glühfaden, damit die Optik der Signalanlage weiter genutzt werden kann.
- Das LED-Leuchtmittel hat die gleichen Farbwerte, wie die bisher verwendete Glühlampe (eindeutige Farberkennung bzw. Signalbegriff).
- Das LED-Leuchtmittel ist für Tag- und Nachtstrom ansteuerbar und kann somit zwei unterschiedliche Helligkeiten anzeigen, inkl. korrekter Farbwerte.
- Das LED-Leuchtmittel weist zwei redundante Lichtkreise bzw. Systeme auf, die bei Ausfall des Primärsystems die weitere Funktion bis zu einer Regelinspektion des Wartungspersonals gewährleisten und den Ausfall des Primärsystems anzeigt/auslöst (Primärkontakt hat keinen Strom mehr, somit "Blinker").
- Das LED-Leuchtmittel besitzt die "Intelligenz", dass bei zu wenig Leistungsaufnahme und/oder Leuchtkraft einer oder mehrerer LEDs des Hauptlichtkreises in den Nebenlichtkreis gewechselt wird und der Hauptlichtkreis abgeschaltet bleibt sowie nicht mehr in Betrieb gehen darf.
- Die Leistungsaufnahme des LED-Leuchtmittels ist so bemessen, dass die Überwachungsrelais bzw. -Schaltung (ehemals Haupt- und Nebenfaden) im Stellwerk weiterhin funktionieren. In der Regel entspricht dies dem "Nachtstrom-Verbrauch" (145 V).
- Die Konstruktion der Erfindung ist so ausgelegt, dass durch geringe Modifikationen in der Produktion, möglichst viele unterschiedliche eingesetzte Signalglühlampen mit der ISi-LED ersetzt werden können.
- Die ISi-LED kann eine universelle Schnittstelle aufweisen, mit der Auswertungen möglich sind oder ggf. Einstellungen der Firmware des Controllers vorgenommen werden können.

### Ausführungsbeispiel

Anhand von Ausführungsbeispielen soll nachstehend die Erfindung näher erläutert werden.

Dabei zeigen:

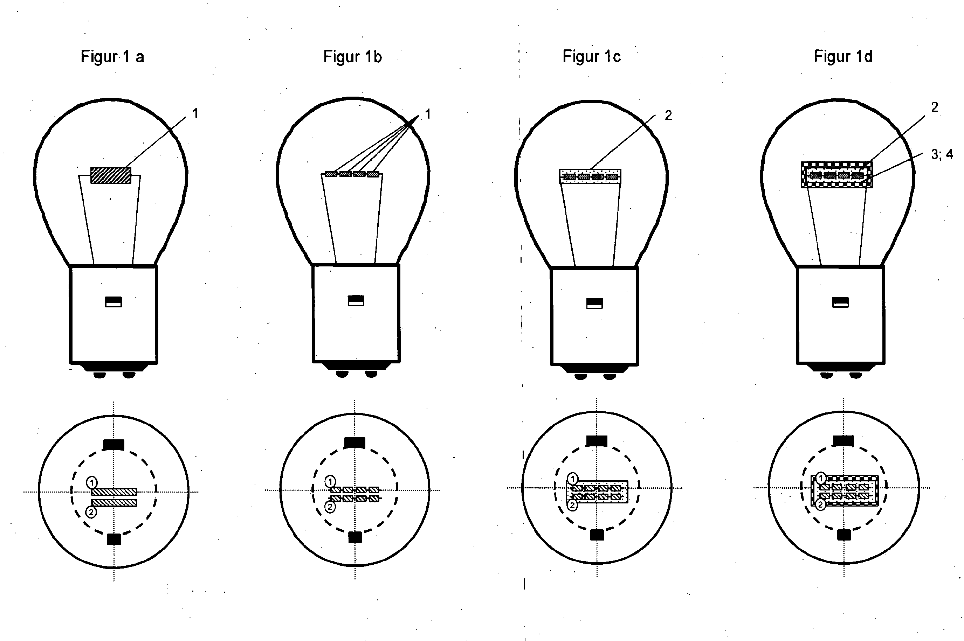

- Figur 1 a - eine LED im Lichtschwerpunkt
- Figur 1 b - mehrere LEDs im Lichtschwerpunkt
- Figur 1.c - mehrere LEDs im Lichtschwerpunkt mit Diffusor
- Figur 1 d - mehrere LEDs im Lichtschwerpunkt mit Diffusor und Lichtwellenleiter
- Figur 2 a - eine LED mit LWL zum Lichtschwerpunkt

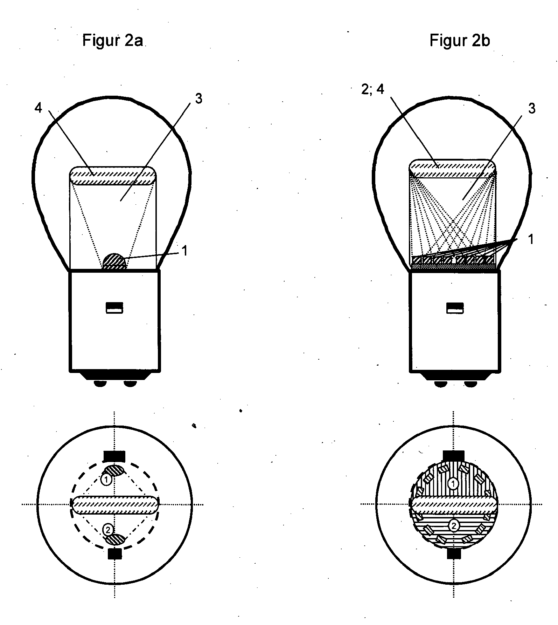

- Figur 2 b - mehrere LEDs mit LWL zum Lichtschwerpunkt
- Figur 3 a - mehrere LEDs im Lichtschwerpunkt mit Diffusor, Lichtwellenleiter und Farbfilter im Kolben
- Figur 3 b - mehrere unterschiedliche LEDs (Mischung des Farbwertes) mit LWL zum Lichtschwerpunkt mit Farbfilter in LWL

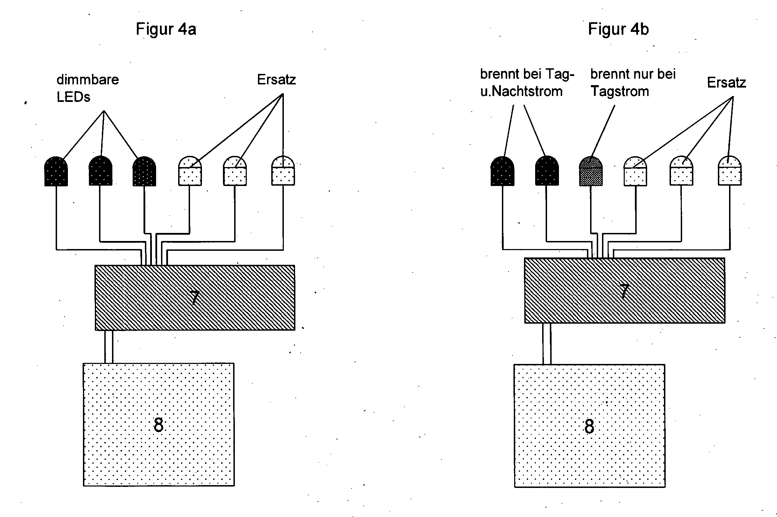

- Figur 4 a - dimmbare LEDs mit elektronischen Stabilisatoren für Tag-/Nachthelligkeit
- Figur 4 b - dazu und abgeschaltete LEDs für Tag-/Nachthelligkeit

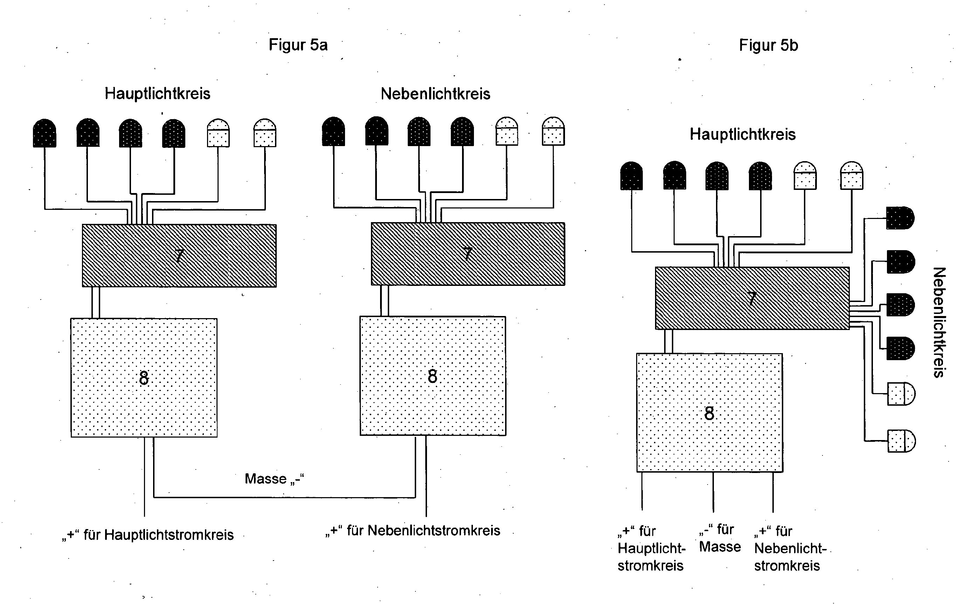

- Figur 5 a - zwei autarke Lichtkreise mit jeweils eigener Elektronik
- Figur 5 b - zwei Lichtkreise mit teilweise den selben genutzten elektronischen Bauteilen

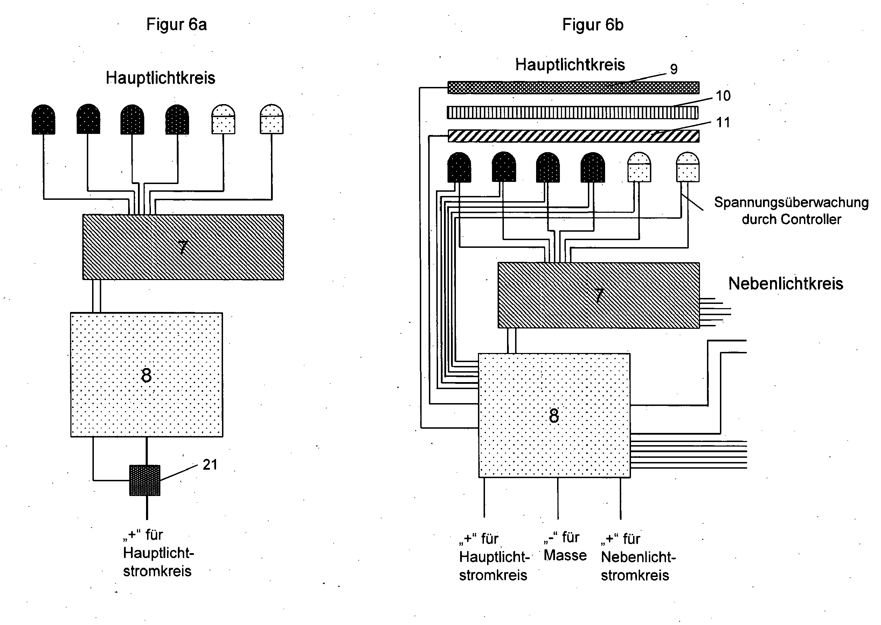

- Figur 6 a - hardwareseitiges Unterbrechungselement (Controllergesteuert)
- Figur 6 b - Sensorelemente für LED-Überwachung

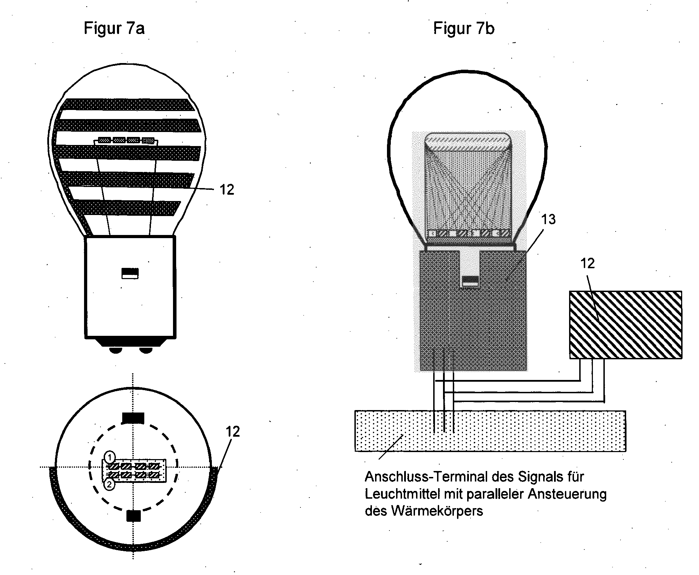

- Figur 7 a - zusätzlicher Wärmekörper in Form von im Kolben integrierten Heizflächen
- Figur 7 b - Heizelement (Widerstand) außerhalb der ISi-LED

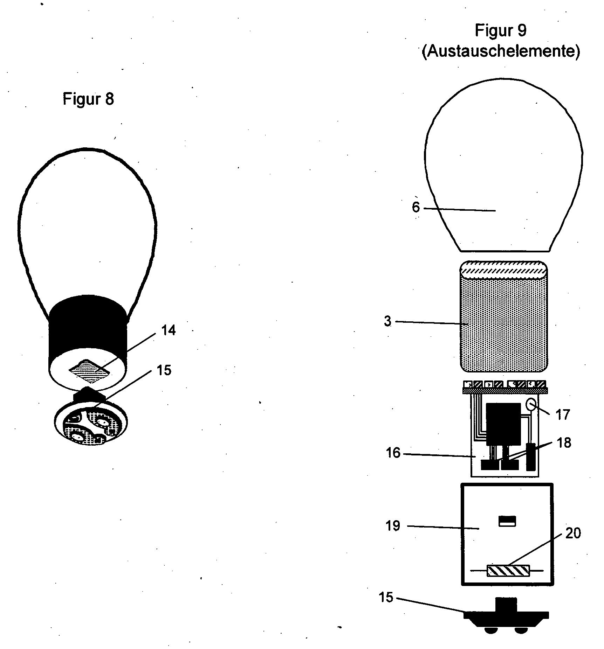

- Figur 8 - universelle Schnittstelle für Auswertungen oder Einstellung der Firmware im Sockel
- Figur 9 - austauschbare Komponenten innerhalb der ISi-LED

a) Das LED-Leuchtmittel muss den gleichen Sockel und in etwa die gleiche Größe wie die bisher verwendeten Signalglühlampen (Glaskolben) besitzen.

### Technische Lösung zur Anforderung a)

### Die Maße des Sockels BA20d (DIN 49730) gelten auch für die ISi-LED

Für die technische Umsetzung und Entwicklung kann demnach auf bestehende produzierte Sockel zurückgegriffen werden. Da bei der ISi-LED (1) kein Druck oder Gas im Kolben (6) benötigt wird, kann auch ein schraubbarer Sockel (19) und/oder schraubbarer Kolben (6) vorgesehen werden. Der Kolben (6) der ISi-LED (1) muss nicht zwingend aus Glas bestehen. Dies kann für die Entwicklung und Produktion weiterer Typen mit unterschiedlicher Elektronik (16) vorteilhaft sein.
Die Maße des Leuchtmittels sind: Durchmesser - 36 mm; Gesamtlänge - 67 mm.

b) Das LED-Leuchtmittel muss die gleiche Leuchtkraft und den gleichen Leucht-Ort besitzen wie der Glühfaden, damit die Optik der Signalanlage weiter genutzt werden kann.

Die Leuchtkraft am Beispiel der SIG 3015 beträgt nach Herstellerangaben 213 Im. Diese Helligkeit muss auch mit der ISi-LED (1) erreicht werden. Im Nachtstrommodus müssen eine geringere Helligkeit sowie der gleiche Lichtschwerpunkt "LCL" und Abstrahlwinkel erreicht werden.

### Technische Lösungen zur Anforderung b)

- Es können, je nach verwendetem LED-Typ (1), eine (siehe Abbildung 1 a, 2a) oder mehrere LEDs (siehe Figuren 1b, 2b) geschaltet werden, um die Helligkeit von z.B. 213 Im [SIG 3015] zu erreichen.
- Genaue Helligkeiten können neben der Leistung (elektronische Dimmung) auch mittels Diffusor/Streu-Flächen (2) (materialabhängige Dimmung) exakt bemessen werden. Diese können als ein zusätzliches Element verwendet werden (siehe Figur 1 c) oder sich direkt in einem Lichtwellenleiter (3) befinden (siehe Figur 2b). Die Elemente können für jede einzelne LED (1) einzeln oder für alle LEDs (1) gemeinsam konzipiert sein.
- Der korrekte Leuchtort mit entsprechendem notwendigen Abstrahlwinkel kann mittels einer oder mehrerer geeigneter LEDs (1) (linienförmig oder kreisförmig angeordnet) direkt im Bereich des notwendigen Lichtschwerpunkts (LCL) erreicht werden (siehe Figuren 1a und 1 b) oder muss mittels geeigneter Lichtwellenleiter (3) (Prisma / LWL-Kabel) zum korrekten Ort gleitet werden (siehe Figuren 1d, 2a, 2b).
- Ein großer Vorteil gegenüber Glühlampen mit Haupt- und Nebenfaden besitzt die ISi-LED, wenn sie so konzipiert ist, dass auch bei Umschaltung in das Ersatzsystem (Nebenlichtkreis 2) die gleiche Helligkeit wie beim Primärsystem auftritt. Bei Glühlampen hat der Nebenfaden zwar die gleiche Leistung, hat jedoch auf Grund des kleinen Versatzes und dem damit nicht ganz korrekten Farbort nicht die ganze Helligkeit.

c) Das LED-Leuchtmittel muss die gleichen Farbwerte besitzen wie die bisher verwendete Glühlampe (eindeutige Farberkennung bzw. Signalbegriff).

### Technische Lösungen zur Anforderung c)

- Um eine geeignete Farbtemperatur zu erhalten, können Farbfilter (10) eingesetzt werden, die sich entweder direkt im Material der LED befinden, im Lichtwellenleiter (3) oder außerhalb des Lichtwellenleiters z.B. direkt im Material des Kolben (6) (siehe Figuren 3a und 3b).
- Alternativ zum Farbfilter (10) können auch verschiedene LEDs (1) genutzt werden, um einen Farbton zu mischen (siehe Figur 3b).

d) Das LED-Leuchtmittel muss für Tag- und Nachtstrom ansteuerbar sein und somit zwei unterschiedliche Helligkeiten anzeigen können inkl. korrekter Farbwerte (siehe b u. c).

### Technische Lösungen zur Anforderung d)

- Es können dimmbare LEDs (1) verwendet werden, die ihre Helligkeit je nach Leistung (Watt) ändern. Um zwei unterschiedliche konstante und exakte Helligkeiten für Tag- und Nachtlicht zu erzeugen, können elektronische Bauteile in Form von Spannungswandler und Stabilisatoren (7) eingesetzt werden, die die minimalen Stromschwankungen auf zwei feste Werte (Tag-/Nachtstrom) korrigieren. Beispiel: Liegt die Spannung zwischen 25 und 30 V wird die LED (oder mehrere) konstant mit 5 Watt und liegt die Spannung zwischen 12 und 20 V wird sie mit 3,5 Watt "bestromt" (siehe Figur 4a).
- Es können LEDs (1) des gleichen Typs oder eines anderen Typs hinzu oder abgeschaltet werden. Zum Beispiel müssen für die Taghelligkeit 3 LEDs (1) brennen und für die Nacht nur 2 (siehe Figur 4b).

e) Das LED-Leuchtmittel muss zwei redundante Stromkreise bzw. Ersatzsysteme aufweisen, die bei Ausfall einer LED oder des Primärsystems die weitere Funktion gewährleisten und den Ausfall des Primärsystems anzeigt/auslöst. (Primärkontakt hat keinen Strom mehr, somit "Blinker")

### Technische Lösungen zur Anforderung e)

- Man kann zwei autarke Lichtkreise in der ISi-LED (1) vorsehen, so dass bei einem Fehler des Hauptlichtkreises (LEDs zu dunkel oder zu viele LEDs defekt) dessen Funktion 1 zu 1 vom Nebenlichtkreis übernommen werden kann (ähnlich Nebenglühfaden) (siehe Figuren 5a, 5b). Die elektronischen Bauteile können für jeden einzelnen Lichtkreis redundant ausgeführt (5a) werden oder nur bestimmte Teile davon (5b).
- Es ist auch möglich auf die Trennung von Haupt- und Nebenlichtkreis zu verzichten und einen kritischen Grenzwert zu definieren. Beispiel: Wenn eine bestimmte Anzahl der Reserve-LEDs defekt ist, unterbricht der Controller (8) den Hauptlichtkreis und aktiviert damit den Nebenlichtkreis im Stellwerk (inkl. "Blinker").

f) Das LED-Leuchtmittel muss die "Intelligenz" besitzen, dass bei zu wenig Leistungsaufnahme und/oder Leuchtkraft einer oder mehrerer LEDs des Hauptlichtkreises in den Nebenlichtkreis gewechselt wird und der Hauptlichtkreis abgeschaltet bleibt und nicht mehr in Betrieb gehen darf.

LEDs (1) haben den Nachteil, dass sie nicht nur eindeutige Zustände besitzen wie "ein" (korrekte Funktion) oder "aus" (keine Funktion), sondern auch Zwischenzustände, im Gegensatz zu Glühlampen. Deshalb müssen Überwachungsmechanismen in der Elektronik vorgesehen werden.

### Technische Lösungen zur Anforderung f)

- Das konstante Ausschalten des Hauptlichtkreises innerhalb der ISi-LED (1) bei auftretendem Fehler kann mittels einer elektronischen Komponente hardwareseitig (siehe Figur 6a) oder im Controller (8) softwareseitig vorgesehen werden oder beides (Simulation eines durchgebrannten Glühfadens mittels durchgebrannter Sicherung in Form eines hardwareseitigen Unterbrechungselements (21) im Hauptlichtstromkreis).
- Die Überwachung auf korrekte Funktion der LEDs (1) kann durch sensorische Bauteile realisiert werden. Da der Stromverbrauch einer LED Rückschlüsse auf korrekte Funktion gibt, sollte in erster Linie eine elektronische Verbrauchsüberwachung durch einen Controller (8) erfolgen. Ergänzend hierzu können Fotozellen (11) oder Temperaturmessungen (9) eingesetzt werden, um die Überwachung zu unterstützen. Um die Fotozellen (11) vor Fremdlichteinstrahlung zu schützen können Polarisationsfilter (10) eingesetzt werden (Siehe Figur 6b).

g) Die Leistungsaufnahme des LED-Leuchtmittels muss so bemessen werden, dass die Überwachungsrelais bzw. -Schaltung (ehemals Haupt- und Nebenfaden) im Stellwerk weiterhin funktionieren. In der Regel entspricht dies dem "Nachtstrom-Verbrauch" (145 V).

LEDs (1) besitzen gegenüber Glühlampen eine hohe Lebensdauer und einen geringen Stromverbrauch. In der alten Relaistechnik der Stellwerke wird jedoch ein Mindestverbrauch (Strom) für die Überwachung und das Umschalten auf den Nebenlichtstromkreis benötigt. Hierfür muss der fehlende Stromverbrauch mit Wärmekörpern (12) in Form von Heizflächen erhöht werden.

Der Mindestverbrauch der ISi-LED (1) sollte dem des reduzierten Nachtstroms entsprechen. Er sollte nicht unterschritten werden, damit das Leuchtmittel für möglichst viele Stellwerkbauarten eingesetzt werden kann. Trotz des Wärmekörpers (12) kann somit bei Taglicht-Betrieb eine Energieeinsparung von ca. 50 % gegenüber der alten Signalglühlampe erzielt werden.

### Technische Lösungen zur Anforderung g)

- Der zusätzliche Stromverbrauch kann mittels Wärmeelemente (12) auf der Platine, im Sockel (19) oder im Kolben (6) (siehe Figur 7a) erreicht werden. Die Wärmeerzeugung hat zusätzlich den Vorteil, dass die Streuscheibe im Winter von Eis frei gehalten werden kann.
- Der Wärmekörper (12) kann sich auch außerhalb der ISi-LED (1) befinden und direkt an Hauptlicht- und Nebenlichtstromkreis angeschlossen werden (siehe Figur 7b) oder mittels einer geeigneten Schnittstelle von der ISi-LED (1) angesteuert werden, um die Heizwirkung besser zu nutzen.

h) Die Konstruktion der Erfindung muss so ausgelegt sein, dass durch geringe Modifikationen in der Produktion, möglichst viele unterschiedliche eingesetzte Signalglühlampen mit der ISi-LED ersetzt werden können.

Ziel der ISi-LED (1) ist es, möglichst viele unterschiedliche Glühlampentypen durch einen TYP ISi-LED (1) zu ersetzten. Da sich im Wesentlichen die Unterschiede bei der Versorgungsspannung und der Lichtleistung/Helligkeit der eingesetzten SignalGlühlampen ergeben, sollte bei der ISi-LED (1) versucht werden, dies mittels geeigneter Elektronik (16) und/oder modularer Bauweise (siehe Figur 9) zu erreichen.

### Technische Lösungen zur Anforderung h)

- Die elektronischen Bauteile sollten für unterschiedliche Spannungsversorgung und LED-Ansteuerungen bzw. unterschiedliche LEDs (1) ausgelegt sein, die mittels eines Encoders oder DIP-Schalters (18) (siehe Figur 9) innerhalb der ISi-LED (1) eingestellt werden können.
- Durch einen schraubbaren Lichtwellenleiter, kann je nach benötigtem Leuchtmitteltyp der Farbort und die Helligkeit eingestellt werden. Die Elektronik (16) bzw. die korrekte Firmware des Controllers (8) kann mittels schraubbarem und mit einem Widerstand (20) versehenen Sockel (19) eingestellt werden.
- Eine automatische Erkennung des Signalglühlampentyps durch den Controller (8) (Messung der Spannungsversorgung des Stellwerks) ermöglicht den Einsatz eines einzelnen standardisierten Produkts für die häufigsten Signale. Durch Nutzung der Überwachungssensorik (Spannungsüberwachung, Helligkeitsmessung und Temperaturmessung) können weitere Signal-Lampentypen erkannt werden.

i) Die ISi-LED sollte eine universelle Schnittstelle aufweisen, mit der Auswertungen möglich sind oder ggf. Einstellungen der Firmware vorgenommen werden können.

Für die Entwicklung und Auswertung der ISi-LED (1) ist eine standardisierte Hardware-Schnittstelle sinnvoll. Hier können mittels geeigneter Software z.B. Messwerte wie Betriebsstunden, Helligkeit, Degenerationsgrad und Auswertungen am PC vorgenommen werden z.B. für die Weiterentwicklung. Es ist möglich, über diese Schnittstelle weitere Glühfadenleuchtmitteltypen mit anderen Parametern (Firmware-Update) auf das Leuchtmittel zu übertragen.

### Technische Lösungen zur Anforderung i)

- Eine in den Lampen-Sockel (19) integrierte Mini-USB-Buchse (14) kann mit Hilfe einer speziellen Adapterplatine (15) gleichzeitig als Stromübertrager zwischen Lampenfassung und Leuchtmittel dienen (siehe Figur 8).

### Liste der verwendeten Bezugszeichen

1 - LED
2 - Diffusor
3 - Lichtwellenleiter
4 - Streulinse
5 - Farbfilter
6 - Kolben
7 - Spannungswandler und Stabilisator
8 - Controller
9 - Temperatursensor
10 - Polarisationsfilter
11 - Fotosensor
12 - Wärmekörper (Heizfläche/Widerstand)
13 - Bajonettverschluss
14 - Mini-USB-Schnittstelle
15 - Mini-USB-Platine
16 - Elektronik
17 - Encoder
18 - Dip-Schalter
19 - Sockel
20 - Widerstand
21 - Hardwareseitiges Unterbrechungselement (Controllergesteuert)

## Patentansprüche

1. Leuchtvorrichtung für eine Lichtsignalanlage des schienengebundenen Verkehrs, wobei die Leuchtvorrichtung mindestens eine lichtemittierenden Diode (LED) besitzt, die
• eine die Elektronik beinhaltende Grundplatine
• einen Lampensockel
• einen Lichtwellenleiter in Form einer Streulinse, Prismas oder LWL-Kabels
• einen lichtdurchlässigen Lampensockel und
• in Halterungen fixierte Hochleistungs-LEDs (1) aufweist,
***gekennzeichnet dadurch, dass***
die Grundplatine
• mind. einen an sich bekannten Microcontroller,
• mind. eine Elektronik (16) zur Regelung und Überwachung der Versorgungsspannung der LEDs(1),
• mind. eine Elektronik (16) zur Regelung und Überwachung der Lichtleistung und/oder Anzahl der LEDs(1),
• einen Encoder (17) oder DIP-Schalter (18) zur Einstellung des Glühlampen-Typ's in Form von Versorgungsspannung, Helligkeit, zusätzliche Widerstände (20) sowie LED-Ansteuerung, eine Photozelle (11) oder eine Photodiode und
• einen zusätzlichen Verbraucher in Form eines Wärmekörpers (12) aufweist,
wobei die verschiedenen regelbaren LEDs (1) mit einer lichtfokussierenden Signaloptik gekoppelt sind.

2. Leuchtvorrichtung nach Anspruch 1, ***gekennzeichnet dadurch, dass*** ein Com-Port zur Steuerung der Microcontroller (8) in der Grundplatine angeordnet ist.

3. Leuchtvorrichtung nach Anspruch 1 und 2, ***gekennzeichnet dadurch, dass*** Drehregler oder Dipschalter (18) zur Einstellung der Versorgungsspannung in der Grundplatine angeordnet sind.

4. Leuchtvorrichtung nach Anspruch 1 bis 3, ***gekennzeichnet dadurch, dass*** Drehregler oder Dipschalter (18) zur Einstellung der Lichtleistung (Dimmung) und/oder Anzahl an LEDs (1) in der Grundplatine angeordnet sind.

5. Leuchtvorrichtung nach Anspruch 1 bis 4, **gekennzeichnet dadurch, dass** sich ein zusätzlicher Verbraucher in Form eines Wärmekörpers (12) innerhalb oder außerhalb der Leuchtvorrichtung befindet.

6. Leuchtvorrichtung nach Anspruch 1 bis 4, ***gekennzeichnet dadurch, dass*** der Lampensockel (19) an seiner Unterseite eine Mini-USB-Schnittstelle (14) zur Aufnahme einer Mini-USB-Platine (15) aufweist.

7. Leuchtvorrichtung nach Anspruch 1 bis 6, ***gekennzeichnet dadurch, dass*** der Lampensockel (19), die Elektronik (16), der Kolben (6) sowie der Lichtwellenleiter (3) austauschbar gestaltet sind.

8. Leuchtvorrichtung nach Anspruch 1 bis 7, ***gekennzeichnet dadurch, dass*** der Lampensockel (19) schraubbar ausgeführt ist.

9. Leuchtvorrichtung nach Anspruch 1 bis 8, ***gekennzeichnet dadurch, dass*** im Lampensockel (19) verschiedene Widerstände (20) angeordnet sind, wobei jedem Widerstand (20) ein Glühlampentyp-Firmware-Modus zugeordnet ist.

10. Leuchtvorrichtung nach Anspruch 1 bis 9, ***gekennzeichnet dadurch, dass*** in der Leuchtvorrichtung eine Überwachungseinrichtung angeordnet ist.

11. Leuchtvorrichtung nach Anspruch 1 bis 10, ***gekennzeichnet dadurch, dass*** als Überwachungseinrichtung die Photozelle/Photodiode (11) zur Messung des durch die Signaloptik reflektierenden und/oder von den LEDs abstrahlenden Lichtes im Vergleich mit einem gespeicherten Wert dient.

12. Leuchtvorrichtung nach Anspruch 11, ***gekennzeichnet dadurch, dass*** der Lichtwellenleiter (3) so angeordnet ist, dass auch bei Aktivierung des Ersatzsystems der korrekte Leuchtort erhalten bleibt.
